# EUROPEAN PATENT APPLICATION

(11) **EP 3 112 711 A1**
(43) Date of publication of application: **04.01.2017**
(21) Application number: 14883587.9
(22) Date of filing: 21.10.2014
(51) Int. Cl.: F16C 33/76, F16C 19/06, F16C 33/78, F16J 15/16, F16J 15/3264, F16J 15/34

(54) **ROLLING BEARING WITH SEAL**

(30) Priority: 27.02.2014 JP 2014037086
(71) Applicant: NSK Ltd., Tokyo 141-8560 (JP)
(72) Inventor: TAHARA, Minoru, Fujisawa-shi Kanagawa 251-8501 (JP)
(74) Representative: Grünecker Patent- und Rechtsanwälte PartG mbB
(86) International application number: PCT/JP2014/077981
(87) International publication number: WO 2015/129096

(57) **Abstract**

Provided is a rolling bearing with a seal in which a seal lip can be made to make sliding contact with a slinger always at a constant contact pressure without being impacted by the centrifugal force associated with rotation of the bearing, and which can ensure dust resistance. The rolling bearing is provided with: a ring-shaped seal member (15) that is secured to an end section in the axial direction of the inner peripheral surface of an outer wheel (11), which is a rotating wheel, and that seals the space between the outer wheel (11) and an inner wheel (12); and a ring-shaped slinger (16) that is secured to an end section in the axial direction of the outer peripheral surface of the inner wheel (12), which is a fixed wheel, with the seal member (15) being in contact with the slinger (16). The seal member (15) is provided with a seal lip (24) that is in sliding contact with the slinger (16). The seal lip (24) can elastically deform so as to turn radially outward due to centrifugal force associated with the rotation of the outer wheel (11). The slinger (16) is formed so as to be curved in accordance with the path of movement of a tip section (24a) of the seal lip (24) which is elastically deformed by the centrifugal force, and has a curved sliding-contact section (16c) with which the tip section (24a) of the seal lip (24) is always in contact.

## Description

### TECHNICAL FIELD

The present invention relates to a rolling bearing with a seal, and more specifically, to a rolling bearing with a seal that is to be used for rotation of an outer ring, such as a rolling bearing configured to support a pulley.

### RELATED ART

Regarding a rolling bearing that is to be used in environments exposed to foreign matters such as muddy water, grit and dust, and the like, a rolling bearing with a seal has been known which has a slinger, in addition to a seal member configured to seal a space between an outer ring and an inner ring (for example, refer to Patent Documents I and 2). In a rolling bearing with a seal disclosed in Patent Document 1, a seal member is configured to be a non-contact type and a slinger configured to cover the seal member is arranged to face an axially outer side of the seal member with a predetermined gap so that it is intended to avoid an increase in bearing torque by reducing seal torque while keeping sealing performance of a bearing inside. Also, in a sealing device for bearing disclosed in Patent Document 2, a sub-seal lip is configured to elastically deform by a centrifugal force associated with rotation of an outer ring and a radial direction width of a sliding contact surface of the sub-seal lip with a slinger is reduced, so that the bearing sealability is appropriately self-adjusted in accordance with a rotation speed and compatibility between high sealability during low-speed rotation and low rotation torque during high-speed rotation is intended.

### CITATIONLIST

### PATENT DOCUMENTS

Patent Document 1: Japanese Patent Application Publication No. 2006-266451A
Patent Document 2: Japanese Patent Application Publication No. 2009-216138A

### SUMMARY OF THE INVENTION

### PROBLMES TO BE SOLVED BY THE INVENTION

In Patent Documents 1 and 2, the seal lip is deformed in a direction of getting away from the slinger by the centrifugal force associated with the rotation, thereby lowering the rotation torque. However, the seal lip is displaced in the direction of getting away from the slinger in proportion to the rotation speed. Therefore, when the high-speed rotation is performed, a gap is formed between the seal lip and the slinger, so that dust resistance may be deteriorated.

The present invention has been made in view of the above situations, and an object of the present invention is to provide a rolling bearing with a seal where a seal lip can be made to make sliding contact with a slinger all the time at a constant contact pressure without being influenced by a centrifugal force associated with rotation of the bearing and dust resistance can be secured.

### MEANS FOR SOLVING THE PROBLEM

The above object of the present invention is achieved by following configurations.
(1) A rolling bearing with a seal including an outer ring, which is a rotating ring having an outer ring raceway surface on an inner peripheral surface thereof, an inner ring, which is a fixed ring having an inner ring raceway surface on an outer peripheral surface thereof, a plurality of rolling elements arranged to be freely rollable between the outer ring raceway surface and the inner ring raceway surface, a ring-shaped seal member fixed to an axial end portion of the inner peripheral surface of the outer ring and configured to seal a space between the outer ring and the inner ring, and a ring-shaped slinger fixed to an axial end portion of the outer peripheral surface of the inner ring and configured to come in contact with the seal member. The slinger is arranged at an axially outermore side than the seal member. The seal member has a seal lip configured to make sliding contact with the slinger. The seal lip elastically deform so as to turn radially outwards by a centrifugal force associated with rotation of the outer ring. The slinger has a curved sliding-contact part which is formed to be curved in accordance with a movement trajectory of a tip portion of the seal lip that is elastically deformed by the centrifugal force and with which the tip portion of the seal lip is always in contact.
(2) In the rolling bearing with a seal of (1), the tip portion of the seal lip has a circular section shape.
(3) In the rolling bearing with a seal of (1) or (2), the seal member has a plurality of the seal lips, and the slinger has a plurality of the curved sliding-contact parts configured to make sliding contact with the plurality of the seal lips, respectively.
(4) In the rolling bearing with a seal of one of (1) to (3), the seal member further has a seal lip configured to make sliding contact with the inner ring.

### EFFECTS OF THE INVENTION

According to the present invention, the seal member has the seal lip configured to make sliding contact with the slinger, the seal lip elastically deform so as to turn radially outwards by the centrifugal force associated with the rotation of the outer ring, and the slinger has the curved sliding-contact part which is formed to be curved in accordance with the movement trajectory of the tip portion of the seal lip that is elastically deformed by the centrifugal force and with which the tip portion of the seal lip is always in contact. Therefore, it is possible to always bring the seal lip into sliding contact with the curved sliding-contact part of the slinger without being influenced by the centrifugal force associated with the bearing rotation and to thereby secure the stable dust resistance.

### BRIEF DESCRIPTION OF THE DRAWINGS

FIG. 1 is a sectional view of main parts, depicting a first embodiment of a rolling bearing with a seal in accordance with the present invention.
FIG. 2 is a sectional view of main parts, depicting a modified embodiment of the first embodiment of the rolling bearing with a seal in accordance with the present invention.
FIG. 3 is a sectional view of main parts, depicting a second embodiment of the rolling bearing with a seal in accordance with the present invention.
FIG. 4 is a sectional view of main parts, depicting a third embodiment of the rolling bearing with a seal in accordance with the present invention.

### DETAILED DESCRIPTION OF EMBODIMENTS

Hereinafter, respective embodiments of a rolling bearing with a seal in accordance with the present invention will be described in detail with reference to the drawings.

### (First Embodiment)

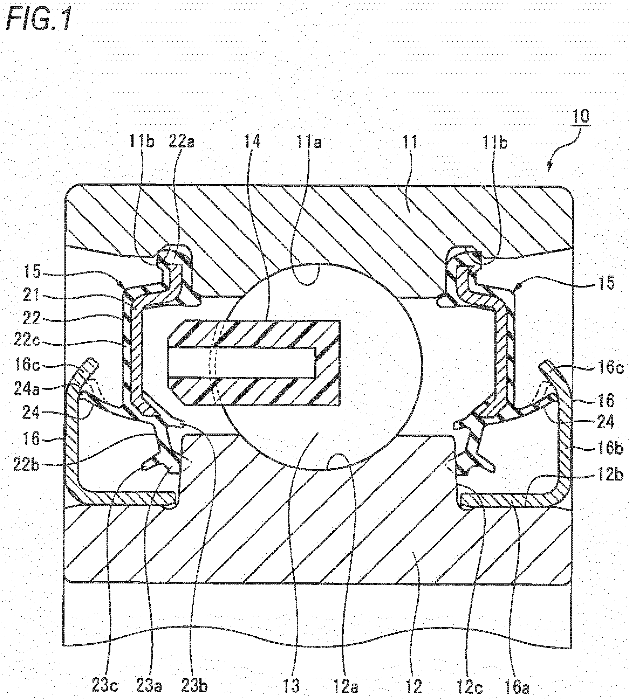

A first embodiment of a rolling bearing with a seal in accordance with the present invention is first described with reference to FIG. 1.

As shown in FIG. 1, a rolling bearing 10 with a seal of the first embodiment includes an outer ring 11, which is a rotating ring having an outer ring raceway surface 11a on an inner peripheral surface thereof, an inner ring 12, which is a fixed ring having an inner ring raceway surface 12a on an outer peripheral surface thereof, a plurality of balls (rolling elements) 13 arranged to be freely rollable between the outer ring raceway surface 11a and the inner ring raceway surface 12a, a cage 14 configured to hold the plurality of balls 13 at a substantial equal interval in a circumferential direction, a ring-shaped seal member 15 fixed to an axial end portion of the inner peripheral surface of the outer ring 11 and configured to seal a space between the outer ring 11 and the inner ring 12, and a ring-shaped slinger 16 fixed to an axial end portion of the outer peripheral surface of the inner ring 12 and configured to come in contact with the seal member 15.

The seal member 15 has a core metal 21 made of a metal plate such as steel plate and formed to have a ring shape, and an elastic part 22 made of an elastic material such as rubber, elastomer or the like and fixed to the core metal 21.

The elastic part 22 has an outer peripheral edge portion 22a formed to slightly protrude radially outwards with covering an outer peripheral edge of the core metal 21, a seal portion 22b extending radially inwards from an inner peripheral edge of the core metal 21, and a side portion 22c fixed to an outer surface of the core metal 21 and configured to couple the outer peripheral edge portion 22a and the seal portion 22b. The outer peripheral edge portion 22a is fixed to an engaging groove 11b, which is formed at an end portion of the outer ring 11, by pressing or the like, for example.

The seal portion 22b has three seal lips of a first seal lip 23a, a first sub-seal lip 23b and a second sub-seal lip 23c. The first seal lip 23a and the first sub-seal lip 23b are formed to protrude towards an axially inward side of a bearing 10, and the second sub-seal lip 23c is formed to protrude towards an axially outward side of the bearing 10.

The first seal lip 23a is configured to make sliding contact with a side wall surface 12c of a seal groove 12b provided at an end portion of the inner ring 12. The first sub-seal lip 23b is configured to form a labyrinth seal between the first sub-seal lip and the side wall surface 12c of the seal groove 12b. The second sub-seal lip 23c is configured to form a labyrinth seal between the second sub-seal lip and an outer peripheral surface of a cylindrical part 16a of the slinger 16, which is to be described later. Thereby, the seal member 15 is configured to seal an inside of the bearing from an outside of the bearing, thereby preventing lubricant (for example, grease, oil and the like) from being leaked to the outside of the bearing and foreign matters (for example, water, grit and dust, and the like) from being introduced into the inside of the bearing.

Also, the seal member 15 has a second seal lip 24 formed at a radially outermore side than the first seal lip 23a and configured to make sliding contact with the slinger 16. The second seal lip 24 is formed to extend axially outwards from an outer surface of the side portion 22c of the elastic part 22 in the vicinity of an inner diameter-side end portion of the core metal 21.

The second seal lip 24 is configured to elastically deform so as to turn radially outwards around a connection part between the side portion 22c of the elastic part 22 and the second seal lip 24 by the centrifugal force associated with rotation of the outer ring 11 (refer to dashed-dotted line in FIG. 1). Also, a tip portion 24a of the second seal lip 24 is arranged to face a curved sliding-contact part 16c of the slinger 16, which is to be described later, and is configured to make sliding contact with an inner surface of the curved sliding-contact part 16c.

The slinger 16 has a cylindrical part 16a arranged at an axially outermore side than the seal member 15 and fitted and fixed to an outer side of the seal groove 12b of the inner ring 12 and a flange part 16b extending radially outwards from an axially outer end portion of the cylindrical part 16a. The slinger 16 is formed to have a substantially L-shaped section. Also, the slinger 16 is formed by pressing a plate material made of stainless steel and having corrosion resistance, for example.

A radially outer end portion of the flange part 16b is formed with the curved sliding-contact part 16c which is formed to be curved in accordance with a movement trajectory of the tip portion 24a of the second seal lip 24 that is elastically deformed by the centrifugal force and with which the tip portion 24a of the second seal lip 24 is always in contact. For this reason, the second seal lip 24 is configured to make sliding contact with the curved sliding-contact part 16c of the slinger 16 all the time at a constant contact pressure without being influenced by the centrifugal force associated with the bearing rotation.

As described above, according to the rolling bearing 10 with a seal of the first embodiment, the seal member 15 has the second seal lip 24 configured to make sliding contact with the slinger 16, the second seal lip 24 elastically deforms so as to turn radially outwards by the centrifugal force associated with the rotation of the outer ring 11, and the slinger 16 has the curved sliding-contact part 16c which is formed to be curved in accordance with the movement trajectory of the tip portion 24a of the second seal lip 24 that is elastically deformed by the centrifugal force and with which the tip portion 24a of the second seal lip 24 is always in contact. Therefore, it is possible to always bring the tip portion 24a of the second seal lip 24 into sliding contact with the curved sliding-contact part 16c of the slinger 16 without being influenced by the centrifugal force associated with the bearing rotation and to thereby secure the stable dust resistance.

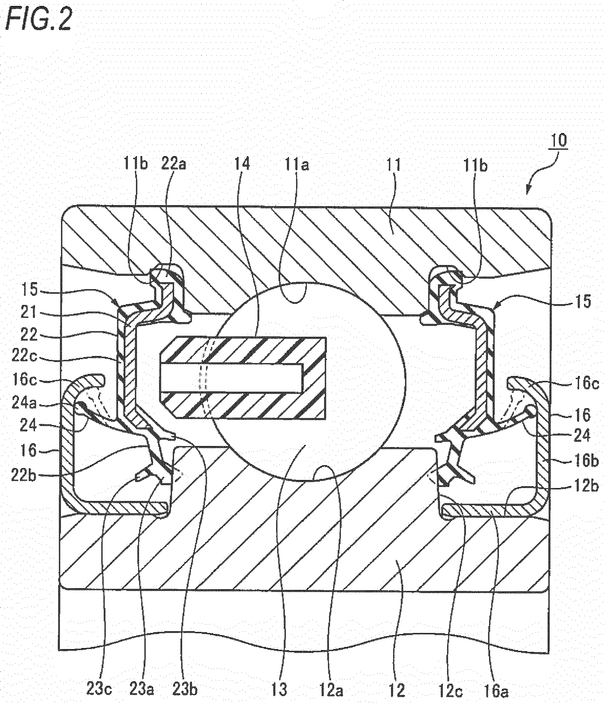

In a modified embodiment of the first embodiment, as shown in FIG. 2, the tip portion 24a of the second seal lip 24 may have a circular section shape. In this case, even when the second seal lip 24 turns radially outwards by the centrifugal force, it is possible to make a contact area between the tip portion 24a of the second seal lip 24 and the curved sliding-contact part 16c of the slinger 16 constant all the time, so that it is possible to further stabilize the dust resistance. In the meantime, the tip portion 24a of the second seal lip 24 may have a semi-circular section shape.

### (Second Embodiment)

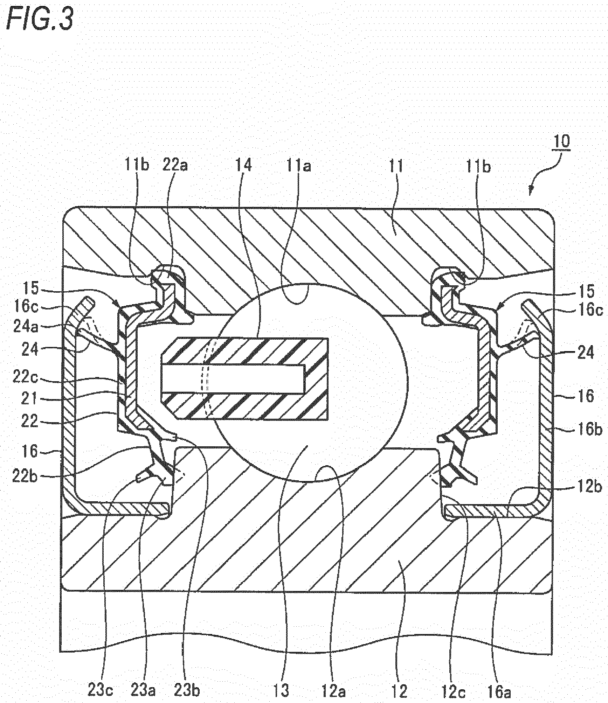

Subsequently, a second embodiment of the rolling bearing with a seal in accordance with the present invention is described with reference to FIG. 3. In the meantime, the same or equivalent parts as or to the first embodiment are denoted with the same or equivalent reference numerals, and the descriptions thereof are omitted or simplified.

As shown in FIG. 3, in the rolling bearing 10 with a seal of the second embodiment, the second seal lip 24 of the seal member 15 is provided at an outermore position than a radial center of the seal member 15. Also, the curved sliding-contact part 16c of the slinger 16 is provided at a position corresponding to the turning movement of the second seal lip 24 by the centrifugal force. In the meantime, the tip portion 24a of the second seal lip 24 may have a circular section shape, like the modified embodiment of the first embodiment.

The other configurations and operational effects are the same as the first embodiment.

### (Third Embodiment)

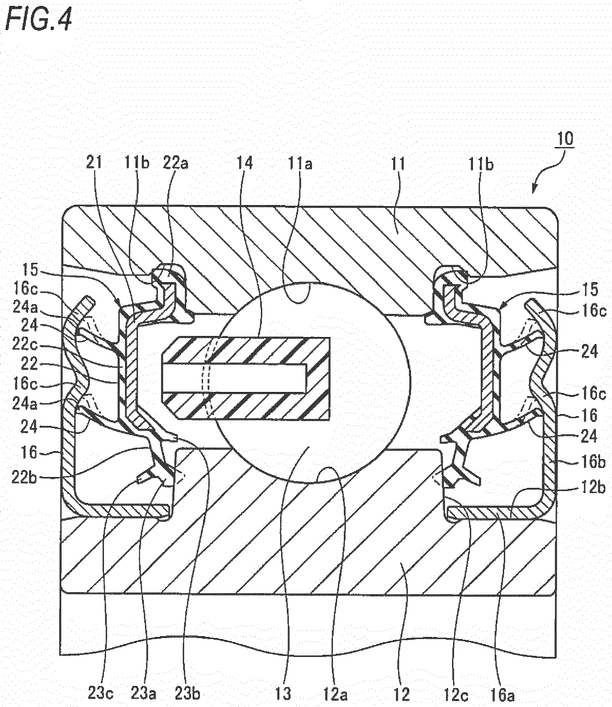

Subsequently, a third embodiment of the rolling bearing with a seal in accordance with the present invention is described with reference to FIG. 4. In the meantime, the same or equivalent parts as or to the first embodiment are denoted with the same or equivalent reference numerals, and the descriptions thereof are omitted or simplified.

As shown in FIG. 4, in the rolling bearing 10 with a seal of the third embodiment, the second seal lip 24 of the seal member 15 is provided at both a position adjacent to the inner diameter-side end portion of the core metal 21, which is the same as the first embodiment, and an outermore position than the radial center of the seal member 15, which is the same as the second embodiment. Also, the curved sliding-contact parts 16c of the slinger 16 are respectively provided at the same positions as the first embodiment and the second embodiment. In the meantime, the tip portion 24a of the second seal lip 24 may have a circular section shape, like the modified embodiment of the first embodiment.

As described above, according to the rolling bearing 10 with a seal of the third embodiment, since the seal member 15 has the two second seal lips 24, and the slinger 16 has the two curved sliding-contact parts 16c configured to make sliding contact with the two second seal lips 24, respectively, it is possible to improve the dust resistance of the seal member 15. Also, since the two second seal lips 24 are provided, even though one second seal lip 24 is poor, it is possible to secure the dust resistance by the other second seal lip 24, so that it is possible to increase the reliability of the bearing 10.

The other configurations and operational effects are the same as the first embodiment.

In the meantime, the present invention is not limited to the respective embodiments and can be appropriately changed without departing from the gist of the present invention.

Although the present invention has been described in detail with reference to the specific embodiments, it is obvious to one skilled in the art that a variety of changes and modifications can be made without departing from the spirit and scope of the present invention. The subject application is based on a Japanese Patent Application No. 2014-037086 filed on February 27, 2014, which is herein incorporated for reference.

### Description of Reference Numerals

- 10:: rolling bearing with a seal
- 11:: outer ring
- 11a:: outer ring raceway surface
- 12:: inner ring
- 12a:: inner ring raceway surface
- 13:: ball (rolling element)
- 15:: seal member
- 16:: slinger
- 16a:: cylindrical part
- 16b:: flange part
- 16c:: curved sliding-contact part
- 21:: core metal
- 22:: elastic part
- 22a:: outer peripheral edge portion
- 22b:: seal portion
- 22c:: side portion
- 23a:: first seal lip
- 23b:: first sub-seal lip
- 23c:: second sub-seal lip
- 24:: second seal lip
- 24a:: tip portion

## Claims

1. A rolling bearing with a seal compsing:
an outer ring, which is a rotating ring having an outer ring raceway surface on an inner peripheral surface thereof,
an inner ring, which is a fixed ring having an inner ring raceway surface on an outer peripheral surface thereof,
a plurality of rolling elements arranged to be freely rollable between the outer ring raceway surface and the inner ring raceway surface,
a ring-shaped seal member fixed to an axial end portion of the inner peripheral surface of the outer ring and configured to seat a space between the outer ring and the inner ring, and
a ring-shaped slinger fixed to an axial end portion of the outer peripheral surface of the inner ring and configured to come in contact with the seal member wherein
the slinger is arranged at an axially outermore side than the seal member,
the seal member has a seal lip configured to make sliding contact with the slinger,
the seal lip elastically deform so as to turn radially outwards by a centrifugal force associated with rotation of the outer ring,
the slinger has a curved sliding-contact part which is formed to be curved in accordance with a movement trajectory of a tip portion of the seal lip that is elastically deformed by the centrifugal force and with which the tip portion of the seal lip is always in contact.

2. The rolling bearing with a seal according to claim 1, whrein the tip portion of the seal lip has a circular section shape.

3. The rolling bearing with a seal according to claim 1 or 2, wherein
the seal member has a plurality of the seal lips, and
the slinger has a plurality of the curved sliding-contact parts configured to make sliding contact with the plurality of the seal lips, respectively.

4. The rolling bearing with a seal according to any one of claims 1 to 3, wherein
the seal member further has a seal lip configured to make sliding contact with the inner ring.
